# EUROPEAN PATENT APPLICATION

(11) **EP 3 845 798 A1**
(43) Date of publication of application: **07.07.2021**
(21) Application number: 18931529.4
(22) Date of filing: 28.08.2018
(51) Int. Cl.: F21S 41/148, F21S 41/30, H05B 33/08

(54) **VEHICLE LAMP USING SEMICONDUCTOR LIGHT-EMITTING DEVICE**

(71) Applicant: ZKW Group GmbH, 3250 Wieselburg (AT)
(72) Inventor: JUNG, Mongkwon, Seoul 06772 (KR); CHA, Joongtaek, Seoul 06772 (KR)
(74) Representative: Patentanwaltskanzlei Matschnig & Forsthuber OG
(86) International application number: PCT/KR2018/009914
(87) International publication number: WO 2020/045698

(57) **Abstract**

The present invention provides a lamp comprising: a half mirror which includes an upper surface and a lower surface, reflects one part of light incident from the lower surface, and emits the other part thereof to the outside; a reflection layer disposed under the half mirror so as to face the lower surface of the half mirror; a transparent substrate disposed between the half mirror and the reflection layer; first light sources disposed at one surface of the transparent substrate; and second light sources disposed at the other surface of the transparent substrate, wherein in order to enable light emitted from the first and second resources to be repeatedly reflected by the half mirror and the reflection layer, the one surface of the transparent substrate is disposed to face the half mirror and the other surface of the transparent substrate is disposed to face the reflection layer.

## Description

### TECHNICAL FIELD

The present disclosure relates to a vehicle lamp (or car lamp) and a control method thereof, and more particularly, a vehicle lamp using a semiconductor light emitting device.

### BACKGROUND ART

A vehicle or car is equipped with various lamps having lighting functions and signaling functions. In general, halogen lamps or gas discharge lamps are usually used, but in recent years, light emitting diodes (LEDs) are in the spotlight as light sources for vehicle lamps.

The LED can enhance a degree of freedom for design of a lamp by minimizing a size thereof, and exhibit economic efficiency by virtue of a semi-permanent lifespan. However, most of the LEDs are currently produced in the form of a package. The LED itself other than the package is under development as a semiconductor light emitting device of converting an electric current into light, namely, an image displaying light source equipped in an electronic device such as an information communication device.

In recent years, attempts have been made to vary an illumination (or lighting) pattern of a lamp as the size of the semiconductor light emitting device decreases. However, in order to realize various illumination patterns, structures other than a light source are required, which causes an increase in the size of the lamp, a decrease in brightness, and the like. As a result, various implementations of the illumination pattern of the lamp are limited.

### DISCLOSURE

### TECHNICAL PROBLEM

One aspect of the present disclosure is to provide a lamp structure capable of realizing a stereoscopic illumination pattern while minimizing a thickness.

Another aspect of the present disclosure is to provide a lamp capable of implementing various illumination patterns.

### TECHNICAL SOLUTION

Embodiments disclosed herein provide a lamp that may include a half mirror having an upper surface and a lower surface and configured to reflect part of light incident on the lower surface and emit another part thereof to outside, a reflector disposed below the half mirror in a manner of facing the lower surface of the half mirror, a transparent substrate disposed between the half mirror and the reflector, a first light source disposed on one surface of the transparent substrate, and a second light source disposed on another surface of the transparent substrate. The one surface of the transparent substrate may be disposed to face the half mirror and the another surface of the transparent substrate may be disposed to face the reflector, so that light emitted from the first and second light sources is repeatedly reflected from the half mirror and the reflector.

In one embodiment, each of the first light source and the second light source may include a plurality of light sources, and the plurality of light sources may be disposed on the transparent substrate to be spaced apart from each other by a predetermined distance.

In one embodiment, the light sources included in the first light source and the light sources included in the second light source may be arranged in an overlapping manner.

In one embodiment, the light sources included in the first light source and the light sources included in the second light source may be alternately arranged.

In one embodiment, a light emitting area of some of the light sources included in the first and second light sources may be different from a light emitting area of the remaining light sources.

In one embodiment, a vertical distance between the half mirror and the transparent substrate may be different from a vertical distance between the transparent substrate and the reflector.

In one embodiment, the transparent substrate may be disposed to be inclined at a predetermined angle with respect to the half mirror.

In one embodiment, at least a portion of the transparent substrate may include a curved region.

In one embodiment, a metal electrode electrically connected to each of the light sources included in the first and second light sources and disposed on the transparent substrate may be further provided.

In one embodiment, the metal electrode may be disposed to surround each of the light sources, so as to reflect light.

In one embodiment, the present disclosure may further include a transparent electrode disposed on the one surface and the another surface of the transparent substrate, respectively, and configured to apply a voltage to each of the first and second light sources.

In one embodiment, each of the first light source and the second light source may include a different type of light source.

In one embodiment, the present disclosure may further include a controller configured to receive a control command generated while a vehicle is driven and control the first and second light sources to be lighted on or off based on the control command.

In one embodiment, when the control command is received while any one of the first light source and the second light source is on, the controller may turn on both the first and second light sources so that an amount of light emitted to a specific region of the half mirror increases.

Embodiments described herein also provide a lamp that may include a half mirror having an upper surface and a lower surface and configured to reflect part of light incident on the lower surface and emit another part thereof to outside, a reflector disposed below the half mirror in a manner of facing the lower surface of the half mirror, a first light source disposed on the upper surface of the half mirror, and a second light source disposed on the lower surface of the half mirror. The second light source may overlap the reflector, so that light emitted from the second light source is repeatedly reflected from the half mirror and the reflector.

### ADVANTAGEOUS EFFECTS

According to the present disclosure, it is not necessary to arrange light sources three-dimensionally in order to realize a stereoscopic illumination pattern. Accordingly, the present disclosure can realize the stereoscopic illumination pattern while maintaining a slim thickness of the lamp.

### BRIEF DESCRIPTION OF THE DRAWINGS

FIG. 1 is a conceptual view illustrating one embodiment of a lamp for a vehicle (or a vehicle lamp) using a semiconductor light emitting device according to the present disclosure.
FIG. 2 is a conceptual view illustrating a flip chip type semiconductor light emitting device.
FIG. 3 is a conceptual view illustrating a vertical type semiconductor light emitting device.
FIG. 4 is a conceptual view illustrating a cross section of a lamp according to the present disclosure.
FIG. 5A and 5B are conceptual views illustrating an illumination pattern of a lamp according to the present disclosure.
FIG. 6 is a conceptual view illustrating a cross section of a lamp in which light sources are arranged on both surfaces of a transparent substrate.
FIGS. 7 to 9 are conceptual views illustrating embodiments of arranging light sources on a transparent substrate.
FIGS. 10 to 12 are conceptual views illustrating modified embodiments of the lamp according to the present disclosure.
FIG. 13 is a conceptual view of a lamp including a metal electrode.
FIG. 14 is a conceptual view illustrating a cross section of a lamp in which a plurality of light sources is arranged on an upper surface of a half mirror.

### MODES FOR CARRYING OUT THE PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings.

It will be understood that when an element such as a layer, area or substrate is referred to as being "on" another element, it can be directly on the element, or one or more intervening elements may also be present.

A vehicle lamp described in this specification may include a head lamp, a tail lamp, a position lamp, a fog lamp, a turn signal lamp, a brake lamp, an emergency lamp, a backup lamp, and the like. However, it will be readily apparent to those skilled in the art that the configuration according to the embodiments described herein may also be applied to a new product type that will be developed later if the device is a device capable of emitting light.

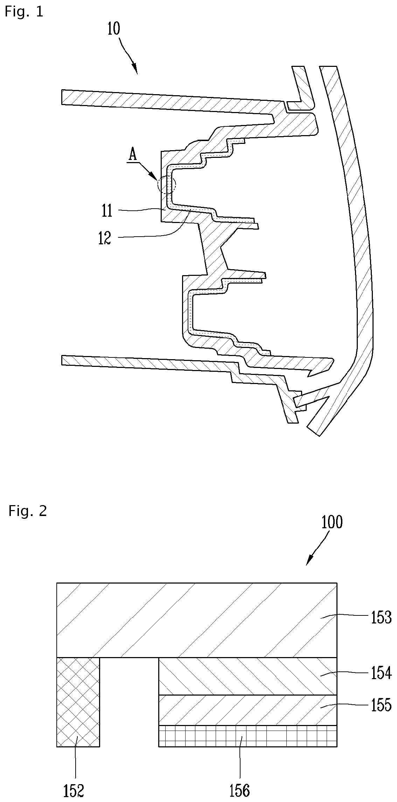

FIG. 1 is a conceptual view illustrating one embodiment of a lamp for a vehicle (or a vehicle lamp) using a semiconductor light emitting device according to the present disclosure.

A vehicle lamp 10 according to one embodiment of the present disclosure includes a frame 11 fixed to a vehicle body, and a light source 12 installed on the frame 11.

A wiring line for supplying power to the light source 12 may be connected to the frame 11, and the frame 11 may be fixed to the vehicle body directly or by using a bracket. As illustrated, the vehicle lamp 10 may be provided with a lens unit to more diffuse and sharpen light emitted from the light source 12.

The light source 12 may be a flexible light source that can be curved, bent, twisted, folded, or rolled by external force.

In a non-curved state of the light source 12 (for example, a state having an infinite radius of curvature, hereinafter, referred to as a first state), the light source 12 is flat. When the first state is switched to a state that the light source 12 is bent by an external force (e.g., a state having a finite radius of curvature, hereinafter, referred to as a second state), the flexible light source unit may have a curved surface with at least part curved or bent.

A pixel of the light source 12 may be implemented by a semiconductor light emitting device. The present disclosure exemplarily illustrates a light emitting diode (LED) as a type of semiconductor light emitting device for converting an electric current into light. The LED may be a light emitting device having a small size, and may thus serve as a pixel even in the second state.

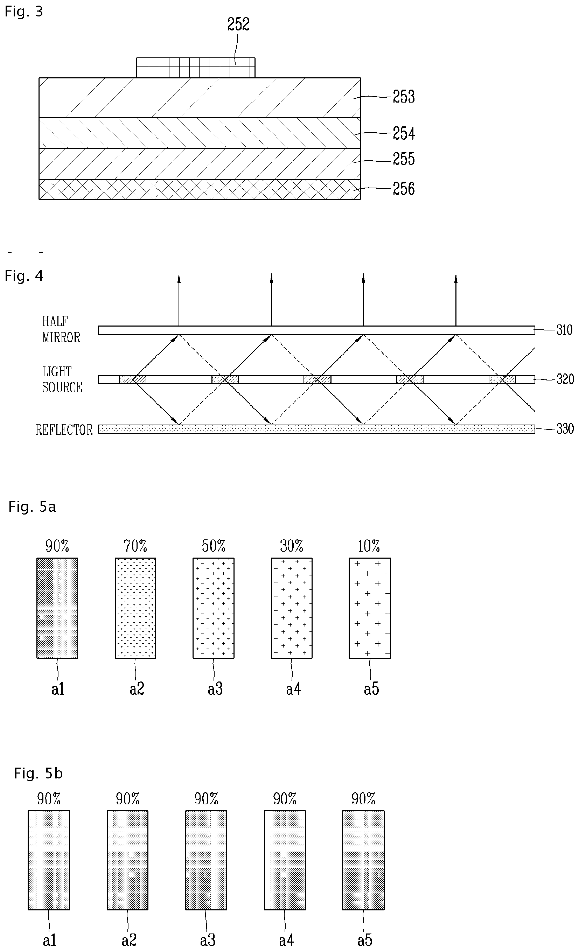

FIG. 2 is a conceptual view illustrating a flip chip type semiconductor light emitting device, and FIG. 3 is a conceptual view illustrating a vertical type semiconductor light emitting device.

Since the semiconductor light emitting device 150 has excellent brightness, it can constitute an individual unit pixel even though it has a small size. The size of the individual semiconductor light emitting device 150 may be less than 80 µm in the length of one side thereof, and may be a rectangular or square shaped device. In this case, an area of the single semiconductor light emitting device is in the range of 10-10 to 10-5 m2, and an interval between light emitting devices may be in the range of 100 um to 10 mm.

Referring to FIG. 2, the semiconductor light emitting device 150 may be a flip chip type light emitting device.

For example, the semiconductor light emitting device includes a p-type electrode 156, a p-type semiconductor layer 155 on which the p-type electrode 156 is formed, an active layer 154 disposed on the p-type semiconductor layer 155, an n-type electrode 153 disposed on the active layer 154, and an n-type electrode 152 disposed on the n-type semiconductor layer 153 with being spaced apart from the p-type electrode 156 in a horizontal direction.

Alternatively, the semiconductor light emitting device 250 may have a vertical structure.

Referring to FIG. 3, the vertical type semiconductor light emitting device includes a p-type electrode 256, a p-type semiconductor layer 255 formed on the p-type electrode 256, an active layer 254 formed on the p-type semiconductor layer 255, an n-type semiconductor layer 253 formed on the active layer 254, and an n-type electrode 252 formed on the n-type semiconductor layer 253.

In addition, the plurality of semiconductor light emitting devices 250 constitute a light emitting device array and an insulating layer is interposed between the plurality of light emitting devices. However, the present disclosure is not necessarily limited thereto, and but alternatively employs a structure in which an adhesive layer fully fills a gap between the semiconductor light emitting devices without the insulating layer.

The insulating layer may be a transparent insulating layer including silicon oxide (SiOx) or the like. As another example, the insulating layer may be formed of epoxy having excellent insulation characteristic and low light absorption, a polymer material such as methyl, phenyl-based silicone and the like, or an inorganic material such as SiN, Al2O3 and the like, in order to prevent shorting between electrodes.

Although the embodiments of the semiconductor light emitting device has been described above, the present disclosure is not limited to the semiconductor light emitting device but may be alternately realized through various semiconductor light emitting devices.

The lamp according to the present disclosure provides a structure capable of realizing a three-dimensional (or stereoscopic) illumination pattern and simultaneously minimizing a thickness of the lamp.

FIG. 4 is a conceptual view illustrating a cross section of a lamp according to the present disclosure.

Referring to FIG. 4, the lamp according to the present disclosure may include a half mirror 310, a reflector 320, and a plurality of light sources 350. Hereinafter, each of the constituent elements will be described, and a coupling relationship between the constituent elements will be described.

First, the half mirror 310 has an upper surface and a lower surface. In this specification, the upper surface of the half mirror 310 is defined as a surface facing an outside. That is, light emitted from the vehicle lamp according to the present disclosure passes through the upper surface of the half mirror 310 and is emitted to the outside.

The half mirror 310 reflects part of light incident on the lower surface and another part is emitted to the outside. For example, the half mirror 310 may reflect 50% of the light incident on the lower surface and transmit the remaining light therethrough. Reflectance or transmittance of the half mirror 310 may vary depending on a material of the half mirror 310.

Meanwhile, the half mirror 310 is not necessarily disposed at the outermost portion of the lamp according to the present disclosure. Light passing through the upper surface of the half mirror 310 may be transmitted to the outside through an additional structure overlapping the upper surface. For example, the lamp according to the present disclosure may include a lens, a protective layer, and the like which overlap the upper surface of the half mirror 310 and are disposed at an outer side than the half mirror 310. However, since these additional configurations are well known in the art, a detailed description thereof will be omitted.

Although only the half mirror 310 and components disposed inside the half mirror 310 are described herein, the present disclosure does not exclude that additional components are disposed outside the half mirror 310.

The reflector 320 is disposed below the half mirror 310 and is disposed to face the lower surface of the half mirror 310. The light reflected by the reflector 320 is directed to the lower surface of the half mirror 310. The light reflected from the lower surface of the half mirror 310 is directed to the reflector 320. The light which is incident between the reflector 320 and the half mirror 310 may be repeatedly reflected between the half mirror 310 and the reflector 320.

When light is repeatedly reflected between the half mirror 310 and the reflector 320 and then emitted to the outside, various illumination patterns are formed. This results in forming a stereoscopic (three-dimensional) illumination pattern.

Specifically, the lamp according to the present disclosure is provided with a plurality of light sources 350 disposed between the half mirror 310 and the reflector 320. Some of light emitted from each of the light sources 350 are repeatedly reflected between the half mirror 310 and the reflector 320 and then emitted to the outside. As a result, such a three-dimensional illumination pattern is formed.

On the other hand, the illumination pattern may be largely divided into two regions. First, one region is a region which is formed as the light is concentrated thereon. The illumination pattern of the lamp according to the present disclosure is generated by overlapping illumination patterns generated respectively by the plurality of light sources. Accordingly, such light-concentrated region may be formed. In this specification, a region where light is concentrated and thus relatively bright as described above is referred to as a first region. The first area may be plural.

Second, another region is a region formed around the first region. The second region is darker than the first region, but gives a three-dimensional feeling. Actually, the first and second regions may not be clearly distinguished by the naked eye. In this specification, for convenience of description, a relatively bright region is referred to as the first region, and a region formed around the first region is referred to as a second region.

Referring to FIG. 5A, an illumination pattern may include a plurality of first regions a1 to a5. Although not shown in FIG. 5A, a three-dimensional pattern is generated around the first regions a1 to a5. Brightness of the first region may decrease (e. g., from 90% to 10%) in one direction. Such an illumination pattern can be utilized as a tail lamp of a vehicle.

On the other hand, as shown in FIG. 5B, the plurality of first regions a1 to a5 may have constant brightness. Since the pattern according to FIG. 5B is brighter than that of FIG. 5A, it may be utilized as a brake lamp.

A size, interval, and shape of the first region may change according to a method of arranging the light sources 350 between the half mirror 310 and the reflector 320, and a stereoscopic shape of the second region may vary. Hereinafter, various embodiments in which the light sources are disposed between the half mirror 310 and the reflector 320 will be described.

Each of the light sources may be the vertical type semiconductor light emitting device or a flip-chip type semiconductor light emitting device. Alternatively, each of the light sources may be an organic semiconductor light emitting device.

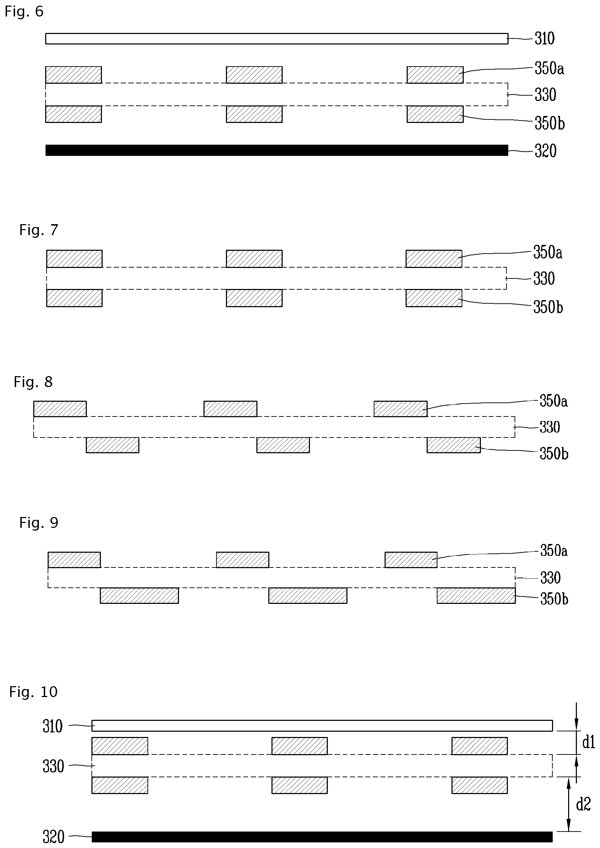

Each of the light sources may be disposed between the half mirror 310 and the reflector 320 through a transparent substrate. In detail, as shown in FIG. 6, the lamp according to the present disclosure includes a transparent substrate 330 disposed between the half mirror 310 and the reflector 320.

Referring to FIG. 6, a plurality of light sources 350a and 350b may be disposed between the half mirror 310 and the reflector 320 through the transparent substrate 330. In detail, the plurality of light sources 350a and 350b is disposed on the transparent substrate 330, and the transparent substrate 330 is spaced apart from the half mirror 310 by a predetermined distance. A circuit for applying a voltage or a current to each of the light sources 350a and 350b may be provided on the transparent substrate 330.

Since the transparent substrate 330 transmits light emitted from the light sources 350a and 350b therethrough, the light emitted from the light sources 350a and 350b may freely move between the half mirror 310 and the reflector 320. Accordingly, the present disclosure minimizes a light loss that may be caused as the light emitted from each of the light sources 350a and 350b is repeatedly reflected by the half mirror 310 and the reflector 320.

The light sources 350a and 350b may be disposed at both surfaces of the transparent substrate 330, respectively. According to this structure, the light sources 350a may be disposed to face the half mirror 310, and the light sources 350b may be disposed to face the reflector 320. In this specification, a light source disposed to face the half mirror 310 is referred to as a 'first light source', and a light source disposed to face the reflector 320 is referred to as a 'second light source'. For the convenience of description, one surface of the transparent substrate 330 on which the first light source is disposed is referred to as an upper surface of the transparent substrate 330, and one surface of the transparent substrate 330 on which the second light source is disposed is referred to as a lower surface of the transparent substrate 330.

At least some (or part) of the light emitted from the first light source is reflected from the half mirror 310, and is repeatedly reflected between the reflector 320 and the half mirror 310, and is then emitted to the outside. At least some of the light emitted from the second light source is reflected from the reflector 320, and is repeatedly reflected between the half mirror 310 and the reflector 320, and is then emitted to the outside.

A plurality of light sources may be disposed at each of the upper and lower surfaces of the transparent substrate 330. The plurality of light sources disposed on the upper and lower surfaces may be spaced apart from each other by a predetermined distance. An illumination or lighting pattern may vary according to a distance and a relative position between the plurality of light sources.

Hereinafter, various embodiments of arranging light sources on the transparent substrate will be described.

FIGS. 7 to 9 are conceptual views illustrating embodiments of arranging light sources on a transparent substrate.

Referring to FIG. 7, the light sources 350a included in the first light source and the light sources 350b included in the second light source may be arranged in an overlapping manner. Here, an illumination pattern formed by the first light source and an illumination pattern formed by the second light source may be symmetrical to each other.

Meanwhile, as illustrated in FIG. 8, the light sources 350a included in the first light source and the light sources 350b included in the second light source may be alternately arranged. In this case, the illumination pattern formed by the first light source and the illumination pattern formed by the second light source may overlap each other to form a new illumination pattern.

Further, the light sources may have different light emitting areas. In more detail, each of the light sources may have a specific light emitting area. For example, the vertical type semiconductor light emitting device has a light emitting area that corresponds to an area of the active layer. Some of the light sources may have a different light emitting area from the remaining light sources.

In one embodiment, the light sources 350a included in the first light source and the light sources 350b included in the second light source may have different light emitting areas, as illustrated in FIG. 9. Accordingly, an illumination pattern formed by the first light source and an illumination pattern formed by the second light source may be different from each other. The two illumination patterns may form a new illumination pattern by overlapping each other.

Although not shown, a light source having a first light emitting area and a light source having a second light emitting area, which is larger than the first light emitting area, may be disposed together on at least one surface of the transparent substrate 330. When the two types of light sources are arranged alternately, an illumination pattern in which the areas of the first regions repeatedly increase or decrease.

As such, various illumination patterns may be achieved by arranging light sources in various shapes on the transparent substrate 330.

Meanwhile, various illumination patterns may be implemented by changing a relative position between the transparent substrate 330, the half mirror 310, and the reflector 320, or by modifying a shape of the transparent substrate 330.

FIGS. 10 to 12 are conceptual views illustrating modified embodiments of the lamp according to the present disclosure.

First, an embodiment of implementing various lighting patterns by changing a relative position between the transparent substrate 330, the half mirror 310, and the reflector 320 will be described.

The transparent substrate 330 may be spaced apart from the half mirror 310 by a predetermined distance and spaced apart from the reflector 320 by a predetermined distance. Since an optical path varies depending on the distance between the half mirror 310 and the transparent substrate 330, and the distance between the reflector 320 and the transparent substrate 330, the illumination pattern may be variously realized by changing the distances.

As shown in FIG. 10, when the transparent substrate 330 is spaced apart from the half mirror 310 and the reflector 320, respectively, a vertical distance d1 between the transparent substrate 330 and the half mirror 310, and a vertical distance d2 between the transparent substrate 330 and the reflector 320 may be different from each other. The illumination pattern may vary depending on the vertical distance d1 between the transparent substrate 330 and the half mirror 310, and the vertical distance d2 between the transparent substrate 330 and the reflector 320.

In one embodiment of the present disclosure, the illumination pattern may change by adjusting the distance between the transparent substrate 330 and the half mirror 310 or the reflector 320. In detail, the present disclosure may further include a driving unit for moving the transparent substrate 330 in a direction perpendicular to an upper surface of the reflector 320 or the lower surface of the half mirror 310. The driving unit perpendicularly moves the transparent substrate 330 to change the optical path. Thus, the illumination pattern can vary.

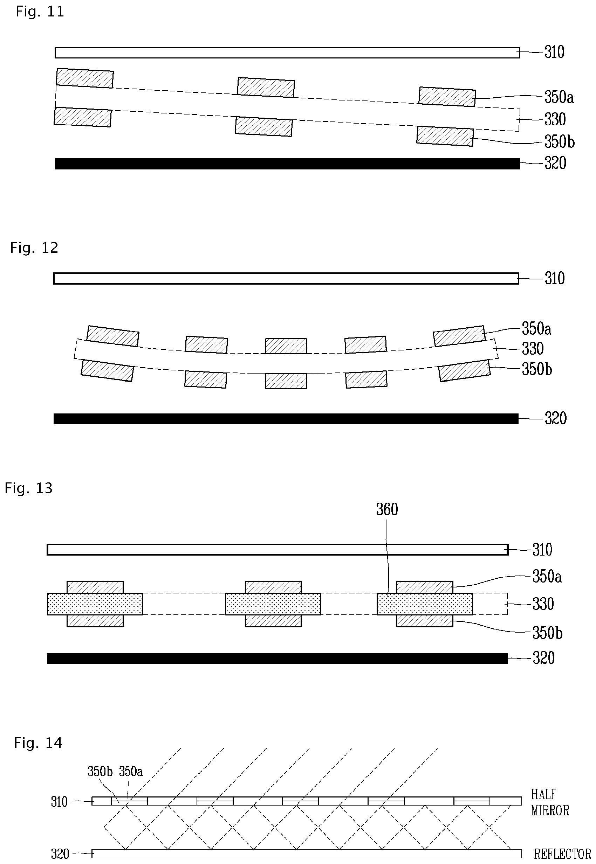

Meanwhile, as illustrated in FIG. 11, the transparent substrate 330 may be disposed at a predetermined angle with respect to the half mirror 310. When the transparent substrate 330 is tilted, an optical path between the first and second light sources may be changed.

In one embodiment, the lamp according to the present disclosure may further include a tilting portion for adjusting a tilted angle of the transparent substrate 330. The tilting portion may change the tilted angle of the transparent substrate 330 to vary the illumination pattern.

Further, the present disclosure may implement various illumination patterns by changing the shape of the transparent substrate 330. In one embodiment, at least a part or portion of the transparent substrate 330 may include a curved region, as shown in FIG. 12. The present disclosure may realize various illumination patterns by changing a curvature of the transparent substrate 330, an area of the curved surface, and the like.

Meanwhile, the present disclosure may provide a structure for increasing brightness of the first region of the illumination pattern.

FIG. 13 is a conceptual view of a lamp including a metal electrode.

Referring to FIG. 13, in order to increase the brightness of the first region, the present disclosure increases a quantity (or amount) of light that is emitted from the light sources 350a included in the first light source and directed to the half mirror 310. In detail, the present disclosure may further include a metal electrode 360 disposed on the transparent substrate 330 to apply a voltage to each of the light sources 350a included in the first light source. The metal electrode 360 may be disposed to surround the light sources 350a so as to reflect light directed toward a lower side of the transparent substrate 330 and light directed toward the reflector 320.

In order for this, the metal electrode 360 may be made of a material having high reflectance. Since electric conductivity of the metal electrode 360 is higher than that of a transparent electrode, the brightness of the light source may increase. Also, since the metal electrode 360 reflects light to increase a quantity of light directed toward the half mirror 310, the brightness of the first region increases. Thus, the present disclosure effectively increases the brightness of the lamp.

Further, the present disclosure provides a structure for allowing brightness of an entire region of an illumination pattern to be uniform without increasing the brightness of the first region.

In detail, the present disclosure may include a transparent electrode disposed on the transparent substrate 330 to apply a voltage to each of the light sources and made of a light-transmitting material. The transparent electrode transmits therethrough light that is emitted from the light source and directed to the reflector 320 or light that is reflected by the half mirror 310 and directed to the reflector 320. Therefore, light is freely reflected between the half mirror 310 and the reflector 320, and a boundary between the first and second regions becomes unclear.

A different type of light source may be provided on the upper and lower surfaces of the transparent substrate 330, respectively.

In one embodiment, the semiconductor light emitting device described with reference to FIG. 2 may be disposed on any one of the upper surface and the lower surface of the transparent substrate 330, and the semiconductor light emitting device described with reference to FIG. 3 may be disposed on the remaining one of the upper surface and the lower surface thereof.

In another embodiment, the semiconductor light emitting devices described in FIGS. 2 and 3 may be disposed on any one of the upper surface and the lower surface of the transparent substrate 330, and the organic semiconductor light emitting device may be disposed on the remaining one of the upper surface and the lower surface thereof.

As such, according to the present disclosure, wiring electrodes may be efficiently arranged or a light source advantageous for securing an amount of light and a light source suitable for realizing a color may be used together by arranging the different types of light sources on both surfaces of the transparent substrate 330.

Meanwhile, the present disclosure may allow the illumination pattern to be changed, so as to realize a plurality of functions in a single lamp.

For example, when the lamp according to the present disclosure is applied to a vehicle, the lamp according to the present disclosure may be used as a tail lamp and simultaneously used as a brake lamp.

To this end, the present disclosure may further include a controller (or a control unit) for controlling the first and second light sources to be lighted on or off. Specifically, the controller included in the lamp receives a control command generated while the vehicle is driven, and controls the first and second light sources to be lighted on or off based on the received control command.

Here, the control command may be generated by a sensing result of a sensing unit disposed in the vehicle or a user input applied through an interface unit.

The sensing unit may sense a status (or state) of the vehicle. The sensing unit may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit may serve as a path allowing the vehicle to interface with various types of external devices connected thereto. For example, the interface unit may be provided with a port connectable with a mobile terminal, and connected to the mobile terminal through the port. In this instance, the interface unit may exchange data with the mobile terminal.

A controller disposed in the vehicle may generate a control command for controlling the lamp based on a sensing result of the sensing unit or a user input applied through the interface unit.

In one embodiment, the controller disposed in the vehicle may generate a control command for controlling the lamp based on a sensing result of pressure applied to the brake pedal. In detail, when pressure applied to the brake pedal increases, the controller disposed in the vehicle may generate a control command for turning on the brake lamp, and transmit the generated control command to the controller provided in the lamp.

The controller provided in the lamp may receive the control command and change an illumination pattern corresponding to the tail lamp to an illumination pattern corresponding to the brake lamp.

In one embodiment, the controller provided in the lamp may turn on at least one of the first light source and the second light source when an illumination pattern corresponding to the tail lamp is realized. In this case, as illustrated in FIG. 5A, an illumination pattern may be formed in which brightness of the first regions are sequentially decreased along one direction. When the controller provided in the lamp receives a control command related to the brake lamp, the controller provided in the lamp lights up both the first and second light sources so that a quantity of light emitted to a specific region of the half mirror 310 can increase. Accordingly, an illumination pattern in which the brightness of the first regions increase, as illustrated in FIG. 5B.

A driver located behind the vehicle can recognize that the speed of the vehicle is decreasing when the illumination pattern changes from FIG. 5A to FIG. 5B. As described above, the present disclosure may allow a single lamp to be utilized as a tail lamp and a brake lamp of a vehicle.

However, the present disclosure may not be limited to the previous embodiments. For example, the present disclosure may sequentially light on the light sources, so that the lamp can be used as turn signal lamps (or direction-indicator lamps).

Meanwhile, the present disclosure may provide a structure in which some of light emitted from a light source is directly emitted to the outside without passing through a half mirror, and the remaining light is repeatedly reflected between the half mirror and the reflector, and is then emitted to the outside.

FIG. 14 is a conceptual view illustrating a cross section of a lamp in which a plurality of light sources is arranged on an upper surface of a half mirror.

In detail, the lamp according to an embodiment of the present disclosure may include a half mirror 310 having an upper surface and a lower surface, configured to reflect part of light incident on the lower surface and emit another part to outside, a reflector 320 disposed below the half mirror 310 in a manner of facing the lower surface of the half mirror 310, a first light source 350a disposed on the upper surface of the half mirror 310, and a second light source 350b disposed on the lower surface of the half mirror 310. The second light source 350b may be disposed to overlap the reflector 320, so that light emitted from the second light source 350b is repeatedly reflected from the reflector 320 and the half mirror 310.

As described above, the first light source 350a may be disposed on the upper surface of the half mirror 310. Accordingly, most of the light emitted from the first light source 350a is directly emitted to the outside without passing through the half mirror 310.

On the other hand, the light emitted from the second light source 350b is repeatedly reflected between the half mirror 310 and the reflector 320, and is then emitted to the outside. Accordingly, a three-dimensional illumination pattern may be formed around the first light source 350a by the second light source 350b. This may allow a three-dimensional pattern to be achieved while securing an enough amount of light of the lamp, which is a predetermined level or more.

Meanwhile, in order to arrange light sources at upper and lower sides of the half mirror 310, transparent substrates may be stacked (or laminated) on the upper and lower surfaces of the half mirror 310. In detail, transparent substrates may be stacked on each of the upper and lower surfaces of the half mirror 310, and light sources may be disposed on one surface of a transparent substrate that does not face the half mirror 310. This may allow the light sources to be securely fixed to the upper or lower side of the half mirror.

It will be apparent to those skilled in the art that the present disclosure may be embodied in other specific forms without departing from the concept or essential characteristics thereof. In addition, the above detailed description should not be construed as limiting in all aspects and should be considered illustrative. The scope of the present disclosure should be determined by rational interpretation of the appended claims, and all changes within the scope of equivalents of the present disclosure are included in the scope of the present disclosure.

## Claims

1. A lamp, comprising:
a half mirror having an upper surface and a lower surface, and configured to reflect part of light incident on the lower surface and emit another part thereof to outside;
a reflector disposed below the half mirror in a manner of facing the lower surface of the half mirror;
a transparent substrate disposed between the half mirror and the reflector;
a first light source disposed on one surface of the transparent substrate;
and
a second light source disposed on another surface of the transparent substrate,
wherein the one surface of the transparent substrate is disposed to face the half mirror and the another surface of the transparent substrate is disposed to face the reflector, so that light emitted from the first and second light sources is repeatedly reflected from the half mirror and the reflector.

2. The lamp of claim 1, wherein each of the first light source and the second light source includes a plurality of light sources, and
wherein the plurality of light sources is disposed on the transparent substrate to be spaced apart from each other by a predetermined distance.

3. The lamp of claim 2, wherein the light sources included in the first light source and the light sources included in the second light source are arranged in an overlapping manner.

4. The lamp of claim 2, wherein the light sources included in the first light source and the light sources included in the second light source are alternately arranged.

5. The lamp of claim 2, wherein a light emitting area of some of the light sources included in the first and second light sources is different from a light emitting area of the remaining light sources.

6. The lamp of claim 1, wherein a vertical distance between the half mirror and the transparent substrate is different from a vertical distance between the transparent substrate and the reflector.

7. The lamp of claim 1, wherein the transparent substrate is disposed to be inclined at a predetermined angle with respect to the half mirror.

8. The lamp of claim 1, wherein at least a portion of the transparent substrate includes a curved region.

9. The lamp of claim 1, further comprising a metal electrode electrically connected to each of the light sources included in the first and second light sources and disposed on the transparent substrate.

10. The lamp of claim 9, wherein the metal electrode is disposed to surround each of the light sources, so as to reflect light.

11. The lamp of claim 1, further comprising a transparent electrode disposed on the one surface and the another surface of the transparent substrate, respectively, and configured to apply a voltage to each of the first and second light sources.

12. The lamp of claim 1, wherein each of the first light source and the second light source includes a different type of light source.

13. The lamp of claim 1, further comprising a controller configured to receive a control command generated while a vehicle is driven and control the first and second light sources to be lighted on or off based on the control command.

14. The lamp of claim 13, wherein the controller, when the control command is received while any one of the first light source and the second light source is on, turns on both the first and second light sources so that an amount of light emitted to a specific region of the half mirror increases.

15. A lamp, comprising:
a half mirror having an upper surface and a lower surface, and configured to reflect part of light incident on the lower surface and emit another part thereof to outside;
a reflector disposed below the half mirror in a manner of facing the lower surface of the half mirror;
a first light source disposed on the upper surface of the half mirror; and
a second light source disposed on the lower surface of the half mirror,
wherein the second light source overlaps the reflector so that light emitted from the second light source is repeatedly reflected from the half mirror and the reflector.
